# EUROPEAN PATENT SPECIFICATION

(11) **EP 3 433 063 B1**
(45) Date of publication and mention of the grant of the patent: **08.07.2020**
(21) Application number: 17716638.6
(22) Date of filing: 22.03.2017
(51) Int. Cl.: B25J 15/00, B21D 39/03, B25J 9/00, B25J 15/02, B25J 15/06, G02B 6/42

(54) **ROBOT ASSEMBLING SYSTEM AND METHOD FOR ASSEMBLING MULTI-LAYER CAGE**
ROBOTERMONTAGESYSTEM UND VERFAHREN ZUR MONTAGE EINES MEHRSCHICHTIGEN KÄFIGS
SYSTÈME D'ASSEMBLAGE DE ROBOT ET PROCÉDÉ D'ASSEMBLAGE DE CAGE MULTICOUCHES

(30) Priority: 25.03.2016 CN 201610186470
(43) Date of publication of application: 30.01.2019
(73) Proprietor: Tyco Electronics (Shanghai) Co., Ltd., China (Shanghai) Pilot Free Trade Zone Shanghai (CN); Innogetic Technology Co., Ltd., Zhuhai, Guangdong (CN)
(72) Inventor: DAI, Zhiyong, Shanghai (CN); HU, Lvhai, Shanghai (CN); DENG, Yingcong, Shanghai (CN); LIU, Yun, Shanghai (CN); WONG, Kok Wai, Shanghai (CN)
(74) Representative: Grünecker Patent- und Rechtsanwälte PartG mbB
(86) International application number: PCT/IB2017/051656
(87) International publication number: WO 2017/163198

(56) References cited:
- EP-A1- 2 492 055
- WO-A1-2007/079117
- WO-A1-2015/120024
- US-A1- 2011 135 429
- US-A1- 2015 171 558
- US-B1- 9 137 929

## Description

### BACKGROUND OF THE INVENTION

### Field of the Invention

The present invention relates to a robot assembling system for a multi-layer cage, a method of assembling a multi-layer cage, and a robot.

### Description of the Related Art

In the prior art, a multi-layer cage generally comprises two or more receiving chamber arranged in an array, for example, the multi-layer cage may comprise a top case, and a bottom case, which are arranged to define an inner space, and two or more partition assembly, and at least one partition plate, which are arranged in the inner space. The at least one partition plate and the partition assemblies are mounted vertically and horizontally in the inner space and configured to divide the inner space into a plurality of receiving chambers. Generally, the top case comprises a top plate and two side walls, which are formed integrally.

In the prior art, the multi-layer case is generally assembled by manual. Firstly, an operator needs to bend the top case with hand or tool and assemble the partition plate and the partition assembly to the top case, so as to form a top case assembly. Then, the operator needs to assemble the bottom case to the top case assembly by manual. During the process of manual assembly, the operator needs to correctly insert all latches of the partition assembly into slots formed in sidewalls of the top case and the partition plate, and insert pins or protrusions of the partition plate into slots formed in the top case and the bottom case. Because there are strict tolerance requirements between these cases in the assembly process, the assembly process is not easy for the operator, and the assembly efficiency is very low. Furthermore, because the operator's fingers may be hurt by sharp edges or pins of these cases, there is a safety hazard in the manual assembly of these cases.

US 2011/0135429 A1 discloses a production facility, which allows a worker to perform manual works such as restoration, setting change and manufacturing, without entering an action area of a robot.

EP 2 492 055 A1 discloses a work system including a robot and work stations. The robot performs a predetermined work on a work-piece, as a work target.

A connector module including a main body having a base and a case as well as a heat-dissipation element is described in US 9,137,929 B1. The base has an external connection surface and two- and-bottom spaced slots located above the external connection surface.

Further connectors comprising a multi-layer cage are described in US 2015/0171558 A1, WO 2015/120024 A1 and WO 2007/079117 A1.

### SUMMARY OF THE INVENTION

The present invention has been made to overcome or alleviate at least one aspect of the above mentioned disadvantages.

According to an object of the present invention, there is provided a robot assembling system for a multi-layer cage and a method of assembling a multi-layer cage, so as to automatically assemble the multi-layer cage and improve the production efficiency.

According to an aspect of the present invention, there is provided a robot assembling system for a multi-layer cage. The multi-layer cage comprises a bottom case, a top case, at least one partition plate and at least two partition assemblies. The robot assembling system comprising: a first assembling workstation configured to assemble the partition plate and the at least two partition assemblies, so as to form a partition means; a second assembling workstation configured to assemble the partition means and the top case, so as to form a top case assembly; a third assembling workstation configured to assemble the top case assembly and the bottom case, so as to form a multi-layer cage; and at least one robot configured to transfer the bottom case, the top case, the partition plate, the at least two partition assemblies, the partition means or the top case assembly between respective assembling workstation, and assist an assembly process at each assembling workstation.

According to an exemplary embodiment of the present invention, the first assembling workstation comprises: a partition plate loading portion configured to load the partition plate; a partition assembly loading portion configured to load the partition assembly; a partition assembly driving device configured to drive the partition assembly to be engaged to the partition plate, so as to form the partition means.

According to another exemplary embodiment of the present invention, the partition plate loading portion comprises: a guide slot into which the partition plate is to be inserted; and a push block configured to fix the partition plate in the guide slot by a spring; the partition assembly driving device comprises: a first driving device configured to drive the partition assembly in a first direction parallel to the partition plate; and a second driving device configured to drive the partition assembly in a second direction perpendicular to the first direction.

According to another exemplary embodiment of the present invention, the at least one robot comprises a gripper adapted to hold the partition means and comprising two fingers opposite to each other, the partition plate is adapted to be received in a gap between the two fingers, and the partition assembly is adapted to be sleeved on the finger.

According to another exemplary embodiment of the present invention, the two fingers are configured to be rotatable relative to each other about a direction perpendicular to the fingers, so as to close or open the gap between the two fingers.

According to another exemplary embodiment of the present invention, the gripper further comprises holding blocks located at both sides of each finger and adapted to elastically press the partition assembly on the finger when the partition assembly is sleeved on the finger.

According to another exemplary embodiment of the present invention, the holding block comprises pins loaded by springs, and a sphere adapted to be pressed against the partition assembly by the springs.

According to another exemplary embodiment of the present invention, the first assembling workstation further comprises a receiving portion located at both sides of the partition plate loading portion, so as to receive the fingers of the at least one robot.

According to another exemplary embodiment of the present invention, the second assembling workstation comprises: a top case loading portion configured to load the top case; two bending mechanisms, between which a space for receiving the top case is defined, configured to bend two sidewalls of the top case, respectively; a supporting device configured to support the partition plate of the partition means from opposite sides of the top case; and a lifting device configured to lift or lower the top case, wherein in a condition where the two sidewalls of the top case are opened by the bending mechanisms and where the partition means is located above the top case, the lifting device drives the top case to move toward the supporting device, so that the top case is engaged to the partition plate; then the bending mechanisms release the two sidewalls of the top case, so that the two sidewalls of the top case are driven to move toward each other and are engaged to the partition means, so as to form the top case assembly.

According to another exemplary embodiment of the present invention, the partition means is assembled on the fingers of the robot during engaging the top case to the partition means; and the fingers are adapted to be pivotally opened when the sidewalls of the top case are engaged to the partition assembly, so that the partition assembly is inclined by an angle, so as to facilitate engaging the sidewalls of the top case to the partition assembly.

According to another exemplary embodiment of the present invention, each bending mechanisms comprises: a frame configured to be rotatable about its pivotal axis; and a holding member adapted to be engaged to the sidewall of the top case, so that the sidewall of the top case is rotated with the frame and bent.

According to another exemplary embodiment of the present invention, the second assembling workstation further comprises: a third driving device configured to drive the supporting device to move toward or away from the partition plate; and a fourth driving device configured to drive the lifting device.

According to another exemplary embodiment of the present invention, the third assembling workstation comprising: a bottom case loading portion configured to load the bottom case; a receiving portion configured to receive the top case assembly; and a suction device adapted to suck up the bottom case and configured to be movable up and down, so as to drive the bottom case to engage with the partition plate and the sidewalls of the top case assembly to form the multi-layer cage.

According to another exemplary embodiment of the present invention, the suction device comprises: a plurality of vacuum suction nozzles configured to suck up the bottom case; and two sliding blocks located at both sides of the vacuum suction nozzle and configured to be movable toward each other, so as to clamp the bottom case.

According to another exemplary embodiment of the present invention, the third assembling workstation further comprises: a fifth driving device configured to drive the suction device to move up and down; and a sixth driving device configured to drive the two sliding blocks to move toward each other.

According to another exemplary embodiment of the present invention, the third assembling workstation comprises: a bottom case loading portion configured to load the bottom case; a receiving portion configured to receive the top case assembly; and a suction device adapted to suck up the bottom case and configured to be movable up and down, so as to drive the bottom case to engage with the partition plate and the sidewalls of the top case assembly to form the multi-layer cage.

According to another exemplary embodiment of the present invention, the top case assembly is assembled on the fingers of the robot during engaging the bottom case to the top case assembly; and the fingers are adapted to be pivotally opened when the bottom case are engaged to the partition plate, so that the partition assembly is inclined by an angle, and the sidewalls of the top case are opened outward, so as to avoid an interference between the bottom case and the sidewalls of the top case.

According to another exemplary embodiment of the present invention, the third assembling workstation further comprises: a fifth driving device configured to drive the suction device to move up and down; a sixth driving device configured to drive the two sliding blocks to move toward each other; and a seventh driving device configured to drive the opened sidewalls of the top case to move toward each other, so that the sidewalls of the top case are engaged to the bottom case.

According to another aspect of the present invention, there is provided a method of assembling a multi-layer cage by the above robot assembling system, comprising steps of:
S1: loading the partition plate and the at least two partition assemblies onto the first assembling workstation by the robot, and assembling the partition plate and the at least two partition assemblies on the first assembling workstation, so as to form the partition means;
S2: loading the top case and the partition means onto the second assembling workstation by the robot, and assembling the top case and the partition means on the second assembling workstation, so as to form the top case assembly; and
S3: loading the top case assembly and the bottom case onto the third assembling workstation by the robot, and assembling the top case assembly and the bottom case on the third assembling workstation, so as to form the multi-layer cage;

In the above various exemplary embodiments of the present invention, the robot assembling system and method for the multi-layer cage may realize the automatic assembly of the multi-layer cage, which greatly improves the efficiency of assembling the multi-layer cage.

### BRIEF DESCRIPTION OF THE DRAWINGS

The above and other features of the present invention will become more apparent by describing in detail exemplary embodiments thereof with reference to the accompanying drawings, in which:
Fig.1 is a general schematic view of a robot assembling system according to an embodiment of the present invention;
Fig.2 is an illustrative perspective view of a multi-layer cage to be assembled by the robot assembling system according to an embodiment of the present invention;
Fig.3 is an exploded perspective view of the multi-layer cage shown in Fig.2;
Fig.4 is an illustrative perspective view of a first assembling workstation of the robot assembling system shown in Fig.1;
Fig.5 is an illustrative perspective view of a storage tray, used to store components of the multi-layer cage , of the robot assembling system shown in Fig.1;
Fig.6 is an illustrative view of a first robot of the robot assembling system shown in Fig.1;
Fig.7 is an illustrative local enlarged view of the first robot, including a gripper and a sucker, of Fig.6;
Fig.8 is an illustrative view of loading a partition plate on the first assembling workstation of Fig.4 by the first robot of Fig.6;
Fig.9 and Fig.10 show illustrative views of loading a partition assembly on the first assembling workstation of Fig.4 by the first robot of Fig.6;
Fig.11 is an illustrative local enlarged view of an operation portion of a second robot in the robot assembling system shown in Fig.1;
Fig.12 is an illustrative enlarged view of fingers of the second robot shown in Fig.11;
Fig.13 is an illustrative view of the fingers shown in Fig.12 in an opened state;
Fig.14 is an illustrative view of engaging the fingers of the second robot of Fig.11 to the first assembling workstation of Fig.4;
Figs. 15-18 show illustrative views of assembling the partition plate and the partition assembly on the first assembling workstation of Fig.4 to form a partition means;
Fig.19 is an illustrative view of assembling the partition means on the fingers of the second robot;
Fig.20 is an illustrative view of the partition means separated from the fingers;
Fig.21 is an illustrative view of a second assembling workstation in the robot assembling system shown in Fig.1;
Fig.22 is an illustrative view of a bending mechanism of the second assembling workstation shown in Fig.21;
Fig.23 is an illustrative view of the bending mechanism of the second assembling workstation shown in Fig.21 in an opened state;
Fig.24 is an illustrative view of loading a top case on the second assembling workstation by the first robot of Fig.6;
Fig.25 is an illustrative view of bending sidewalls of the top case by the bending mechanism in the second assembling workstation;
Fig.26 is an illustrative view of loading the partition means on the second assembling workstation by the fingers of the second robot;
Fig.27 is an illustrative view of assembling the partition means and the top case on the second assembling workstation;
Fig.28 is an illustrative view of inserting protrusions of the partition plate into slots formed in the top plate of the top case;
Figs.29-30 show an illustrative view of the fingers, which are opened by a certain angle, of the second robot;
Fig.31 is an illustrative view of the opened fingers, on which the partition means is mounted, of the second robot;
Fig.32 is an illustrative view of the partition means and the top case assembled together on the second assembling workstation;
Fig.33 is an illustrative view of loading a bottom case on a third assembling workstation by the first robot;
Fig.34 is an illustrative structure view of an air claw of the third assembling workstation shown in Fig.33;
Fig.35 is an illustrative structure view of sucking up the bottom case by the air claw;
Fig.36 is an illustrative view of details of the air claw;
Fig.37 is an illustrative view of loading the top case assembly on the third assembling workstation by the fingers of the second robot;
Fig.38 is an illustrative view of moving the bottom case to a position above the top case assembly by the air claw; and
Fig.39 is an illustrative view of assembling the bottom case to the top case assembly on the third assembling workstation.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a robot assembling system for assembling a multi-layer cage. The multi-layer cage comprises a bottom case, a top case, at least one partition plate and at least two partition assemblies. The robot assembling system comprises: a first assembling workstation configured to assemble the partition plate and the partition assembly to form a partition means; a second assembling workstation configured to assemble the partition means and the top case to form a top case assembly; a third assembling workstation configured to assemble the top case assembly and the bottom case to form a multi-layer cage; and at least one robot configured to transmit the bottom case, the top case, the partition plate, the partition assembly, the partition means or the top case assembly between respective assembling workstation, and assist an assembly process at each assembling workstation.

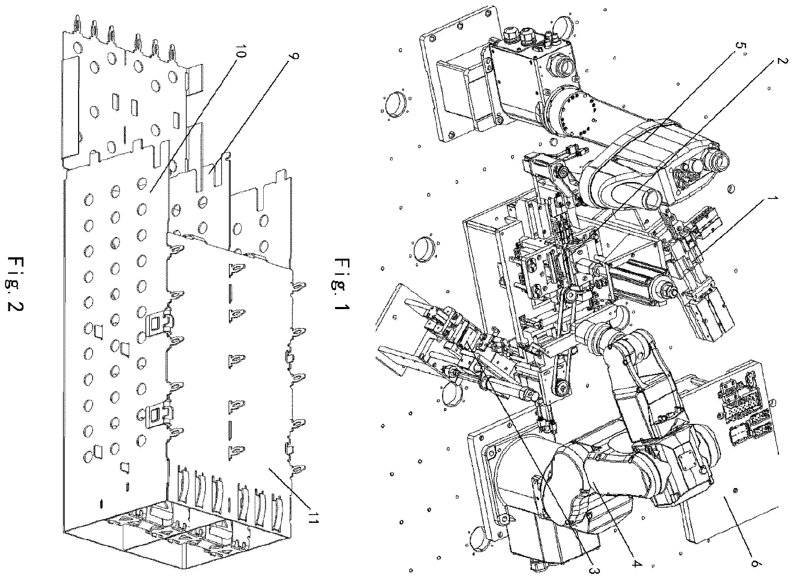

Fig.1 is a general schematic view of a robot assembling system according to an embodiment of the present invention. As shown in Fig.1, in an exemplary embodiment of the present invention, the robot assembling system mainly comprises: a first assembling workstation 1 configured to assemble the partition plate 9 and the partition assembly 15, so as to form a partition means 150; a second assembling workstation 2 configured to assemble the partition means 150 and the top case 10, so as to form a top case assembly 100; a third assembling workstation 3 configured to assemble the top case assembly 100 and the bottom case 11, so as to form a multi-layer cage; and a first robot 4, for example, a six-axis robot, configured to transmit and load various components of the multi-layer cage to respective assembling workstation 1 or 2; a second robot 5, for example, a four-axis robot, configured to transmit and load the partition means 150 or the top case assembly 100 between respective assembling workstation 1, 2 or 3, and assist an assembly process at each assembling workstation 1, 2, 3.

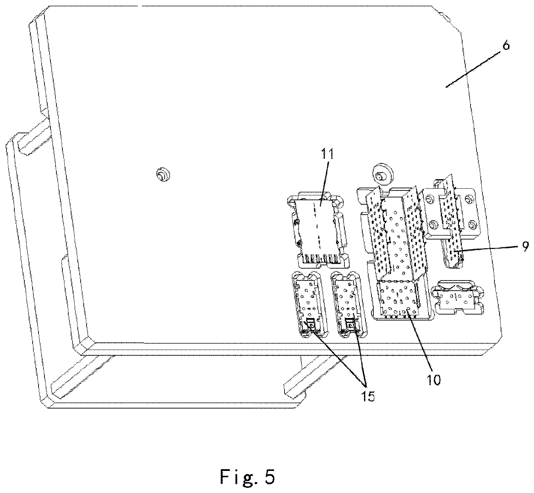

Also, as shown in Figs.1 and 5, in an embodiment, the robot assembling system further comprises a storage tray 6 for storing the components of the multi-layer cage.

Although two robots are shown in the illustrated embodiments, functions of the two robots may be achieved by a single robot, for example, the second robot may comprise a further operation arm for performing the loading and transmitting functions of the first robot. In addition, the robot in the embodiments of the present invention comprises but not limited to the four-axis robot or the six-axis robot, that is, the robot may be any other type of multi-freedom robot. These robots may be configured to identify components based on the preset program, so as to control the gripper to grab the corresponding component, and place the gripped component on a predetermined position. As the structure of the robot has been described in detail in the prior art, descriptions thereof are omitted herein.

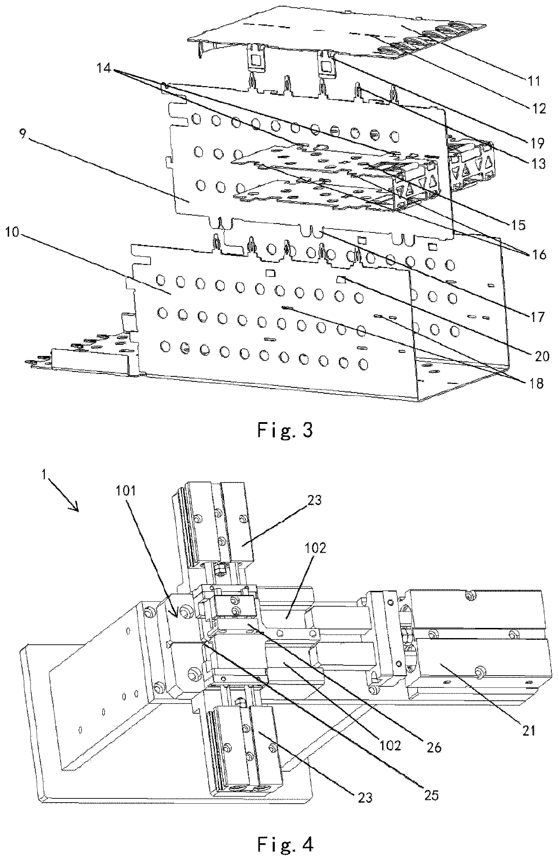

Fig.2 is an illustrative perspective view of a multi-layer cage to be assembled by the robot assembling system according to an embodiment of the present invention; Fig.3 is an exploded perspective view of the multi-layer cage shown in Fig.2.

As shown in Figs. 2 and 3, in the illustrated embodiment, the multi-layer cage comprises two layers of cases. As shown in Figs.2 and 3, the multi-layer cage comprises a top case 10, a partition plate 9, a bottom case 11 and two partition assemblies 15. The top case 10 comprise a top wall and two sidewalls integrally formed with the top wall. Each partition assembly 15 has a substantial U-shaped. A plurality of latches 14 are formed on the inner side of each partition assembly 15 and constructed to be inserted into a plurality of slots formed in the partition plate 9, respectively. A plurality of latches 16 are formed on the outer side of each partition assembly 15 and constructed to be inserted into a plurality of slots 18 formed in the sidewall of the top case 10. A plurality of protrusions 17 formed on the bottom side of the partition plate 9 are constructed to be inserted into a respective slot formed in the top wall of the top case 10. A plurality of pins 13 formed on the top side of the partition plate 9 are constructed to be inserted into a respective slot 12 formed in bottom case 11. A plurality of hooks 19 formed on the bottom case 11 are constructed to be engaged to a respective clip 20 provided on the sidewall of the top case 10.

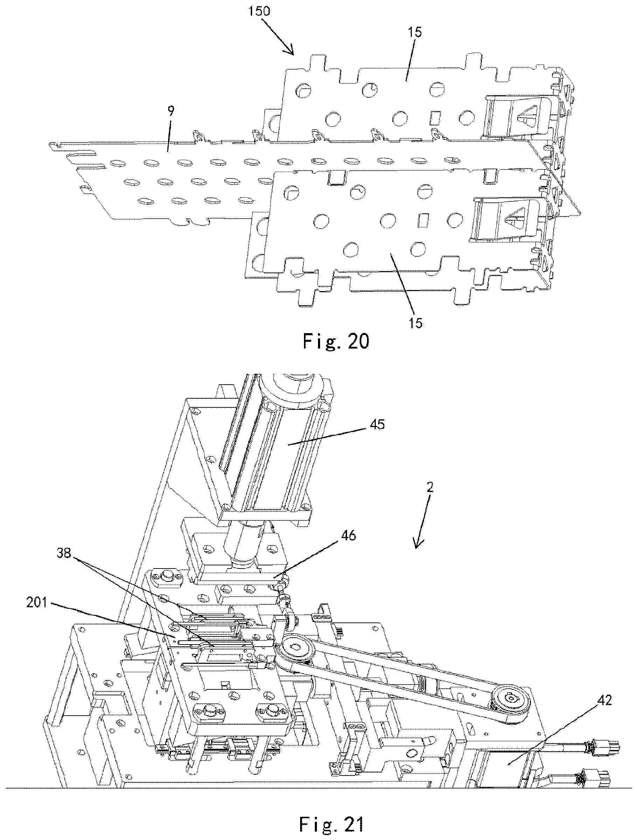

Fig.4 is an illustrative perspective view of a first assembling workstation of the robot assembling system according to an exemplary embodiment of the present invention. As shown in Fig.4, the first assembling workstation 1 mainly comprises: a partition plate loading portion 101 configured to load the partition plate 9 (see Fig.3); two partition assembly loading portions 102 configured to receive two partition assemblies 15; a driving device configured to drive the latch 14 on the inner side of the partition assembly 15 to engage with the slot of the partition plate 9 (see Fig.3) when the partition plate 9 and the partition assembly 15 are placed on the first assembling workstation 1, so as to form the partition means 150 (see Fig.20).

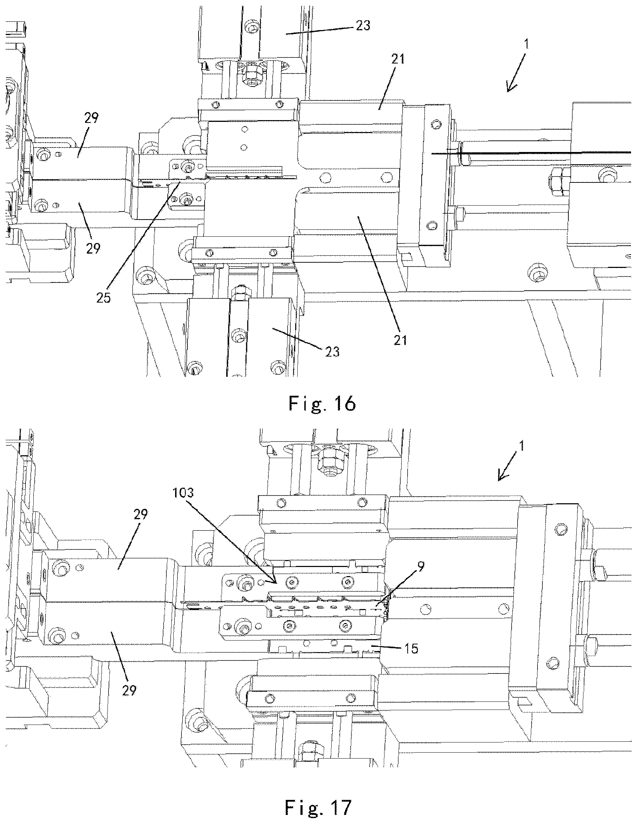

In an embodiment, as shown in Figs.4 and 8-20, the partition plate loading portion 101 comprises: a guide slot 25 into which the partition plate 9 is to be inserted; and a push block 26 configured to fix the partition plate 9 in the guide slot 25 by springs. The driving device may comprise a first driving device 21 and a second driving device 23. The first driving device 21 is constructed to drive the partition assembly 15 in a first direction parallel to the partition plate 9. The second driving device is constructed to drive the partition assembly 15 in a second direction perpendicular to the first direction. In an embodiment, the first driving device 21 and the second driving device 23 may comprise an air cylinder.

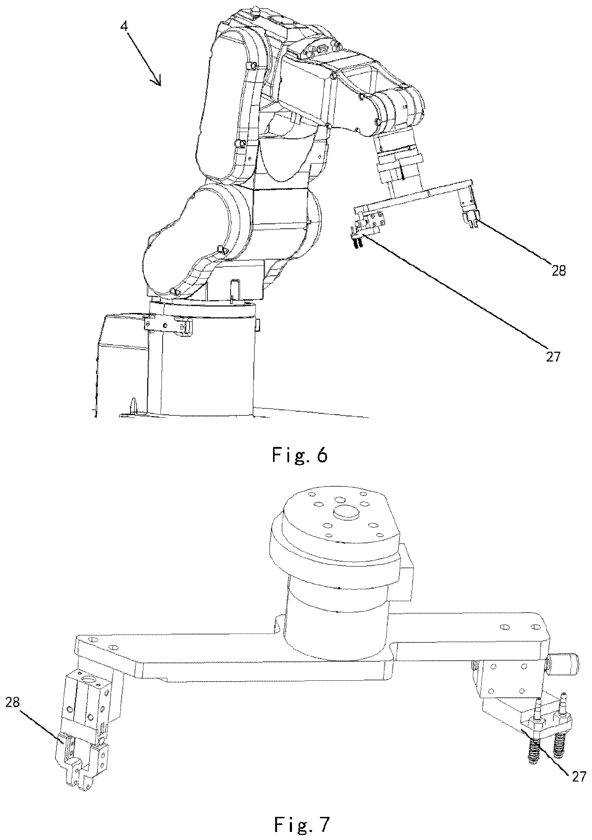

Fig.6 is an illustrative view of a first robot 4 of the robot assembling system shown in Fig.1. Fig.7 is an illustrative local enlarged view of an operation portion of the first robot 4. As shown in Figs.6 and 7, the first robot 4 comprises a gripper 28 and a sucker 27 adapted to clamp or suck up components of the multi-layer cage from the storage tray 6 (see Figs.1 and 5), respectively, and load the components to respective loading locations of respective assembling workstation.

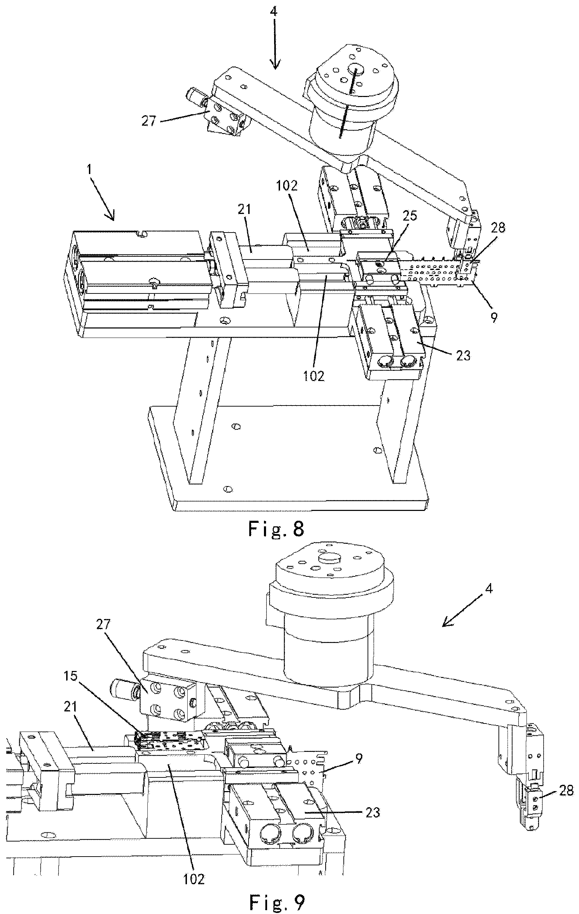

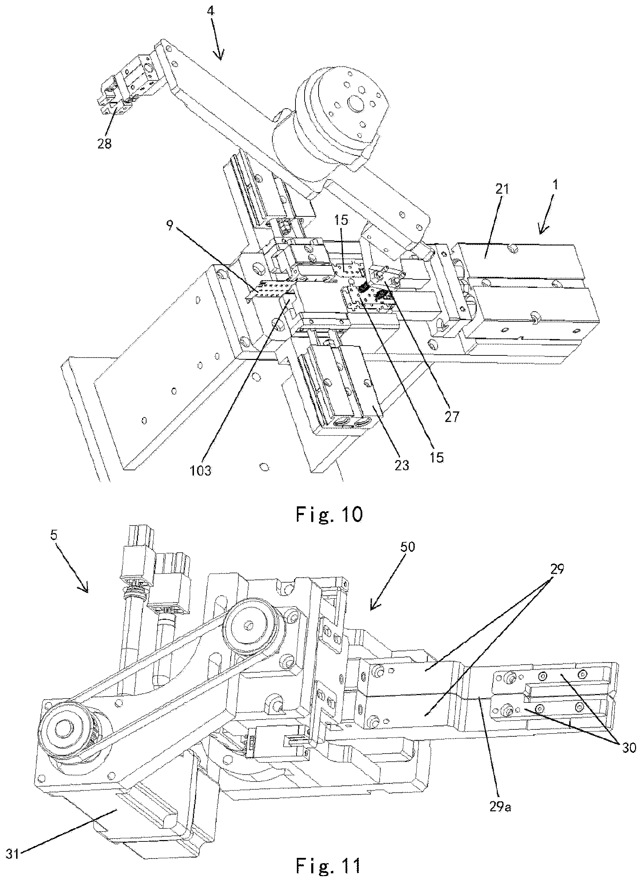

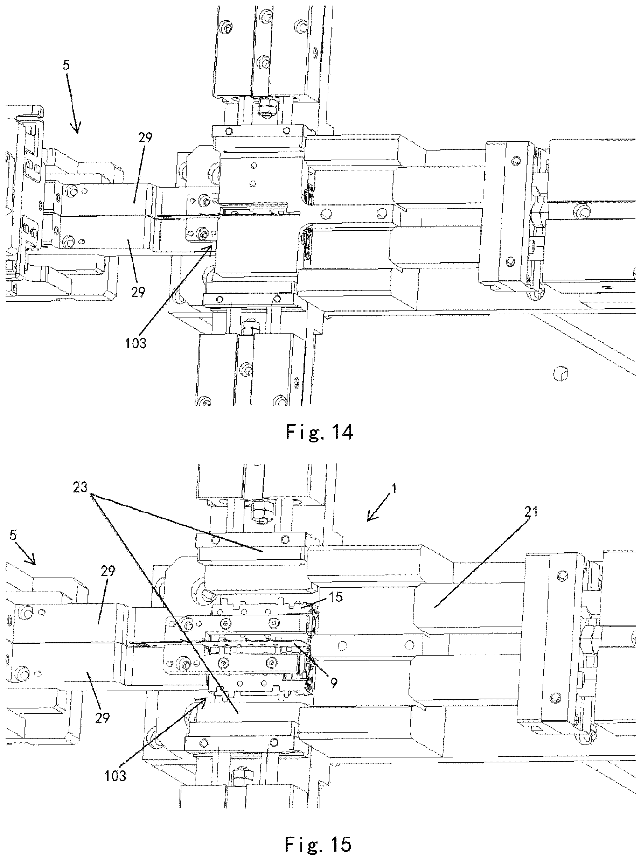

Fig.8 is an illustrative view of loading the partition plate 9 on the first assembling workstation 1 by the first robot 4. Fig.9 and Fig.10 show illustrative views of loading the partition assembly 15 on the first assembling workstation 1 by the first robot 4. After the first robot 4 positions the partition plate 9 and the partition assembly 15 on a loading location on the first assembling workstation 1, as shown in Figs. 15-20, the first driving device 21 pushes the partition assembly 15 in the direction parallel to the partition plate 9, so as to move the partition assembly 15 to both sides of the partition plate 9; then, the second driving device 23 pushes the partition assembly 15 in the direction perpendicular to the partition plate 9, so as to insert the latches 14 of the partition assembly 15 into the slots of the partition plate 9 (see Fig.3), respectively, so as to form a partition means 150 as shown in Fig.20.

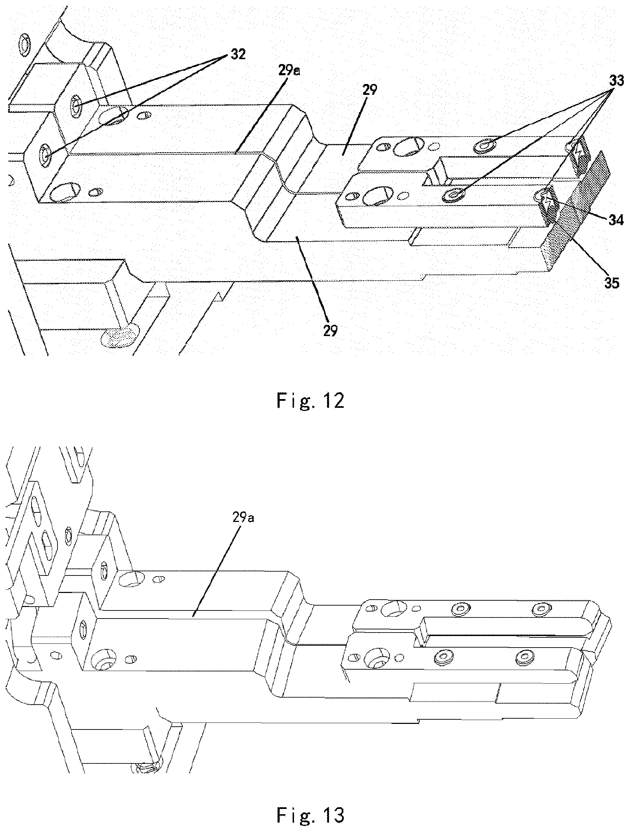

Fig.11 is an illustrative local enlarged view of an operation portion of a second robot 5 in the robot assembling system shown in Fig.1; Fig.12 is an illustrative enlarged view of fingers 29 of the second robot 5 shown in Fig.11; Fig.13 is an illustrative view of the fingers 29 shown in Fig.12 in an opened state. As shown in Figs. 11-13, the second robot 5 comprises a gripper adapted to hold the partition means 150. The gripper comprises two fingers 29 arranged opposite to each other, the partition plate 9 is adapted to be received in a gap 29a between the two fingers 29, and the two partition assemblies 15 are adapted to be sleeved on the fingers 29, respectively.

In an embodiment, the two fingers 29 are configured to be rotatable relative to each other about a direction perpendicular to the fingers 29, so as to close or open the gap 19a between the two fingers 29. As shown in Fig.12, the fingers 29 are in the closed state. As shown in Fig.13, the fingers 29 are in the opened state. In an embodiment, the two fingers 29 may be driven by motors 31 (see Fig.11) to rotate about axes of two pins 32, respectively.

In an embodiment, as shown in Figs.11-13, the gripper 50 further comprises holding blocks 30 located at both sides of each finger 29, and the holding blocks 30 are adapted to elastically press the partition assembly 15 on the finger 29 when the partition assembly 15 is sleeved on the finger 29.

In an embodiment, four pins 33 are provided on the two fingers 29. A spring 34 is provided in each of the pins 33. During assembling the partition assembly 15, the spring 34 presses a sphere 35 in a hole formed in the partition assembly 15, so as to position the partition assembly 15 and maintain the partition assembly 15 during assembly.

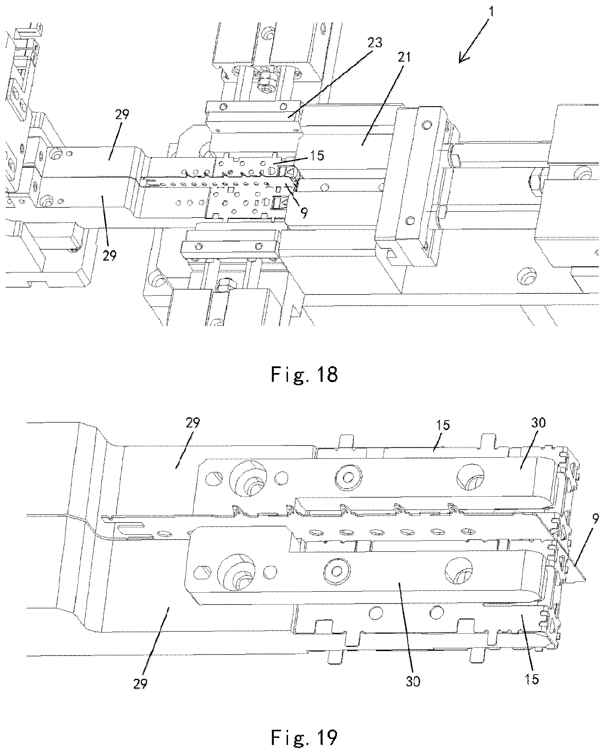

Fig.14 is an illustrative view of engaging the fingers 29 of the second robot 5 to the first assembling workstation 1; Figs.15-18 show illustrative views of assembling the partition plate 9 and the partition assembly 15 on the first assembling workstation 1; Fig.19 is an illustrative view of assembling the partition means 150 on the fingers 29 of the second robot 5; and Fig.20 is an illustrative view of the partition means 150 separated from the fingers 29.

As shown in Figs.14-20, during assembling the partition assembly 15 to the partition plate 9, the fingers 29 of the second robot 5 may be inserted into receiving portions 103 located at both sides of the partition plate 9, respectively, loaded on the first assembling workstation 1 (see Fig.15), so as to guide the partition assembly 15 to move. After the partition means 150 is formed, the fingers 29 of the second robot 5 may remove the partition means 150 from the loading location of the first assembling workstation 1, and transmit the formed partition means 150 to a respective loading location on the second assembling workstation 2.

In an embodiment, operation of assembling the partition means 150 on the first assembling workstation 1 may be described as follows.

Firstly, as shown in Fig.8, the partition plate 9 is inserted into a slit 25 formed in the loading portion 101 of the first assembling workstation 1 by the gripper 28 of the first robot 4, and the partition plate 9 is fixed on the loading location by the push block in a manner of spring loading.

Then, as shown in Figs.9 and 10, the two partition assemblies 15 are loaded to the loading location by the vacuum sucker 27 of the first robot 4.

Then, as shown in Figs. 14 and 15, the gripper 50 of the second robot 5 is engaged to the first assembling workstation 1 by the fingers 29, so that the two fingers 29 are located at both sides of the partition plate 9, respectively, and the partition plate 9 is inserted into the gap 29a between the fingers 29.

Then, the first driving device 21 pushes the partition assembly 15 in the direction parallel to the partition plate 9, so as to move the partition assembly 15 to the both sides of the partition plate 9; then, the second driving device 23 pushes the partition assembly 15 in the direction perpendicular to the partition plate 9, so as to insert the latches 14 of the partition assembly 15 into the slots of the partition plate 9 (see Fig.3), respectively, so as to form the partition means 150 as shown in Fig.20.

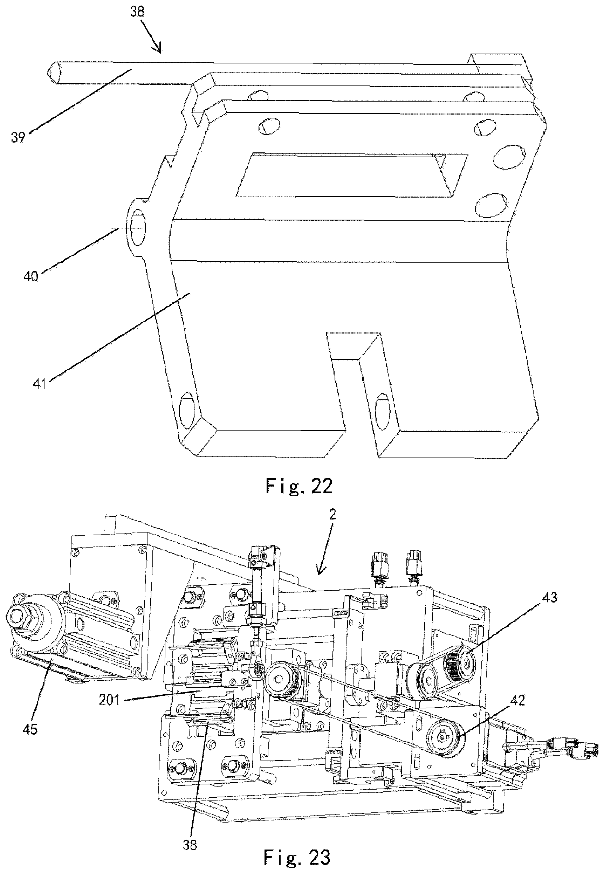

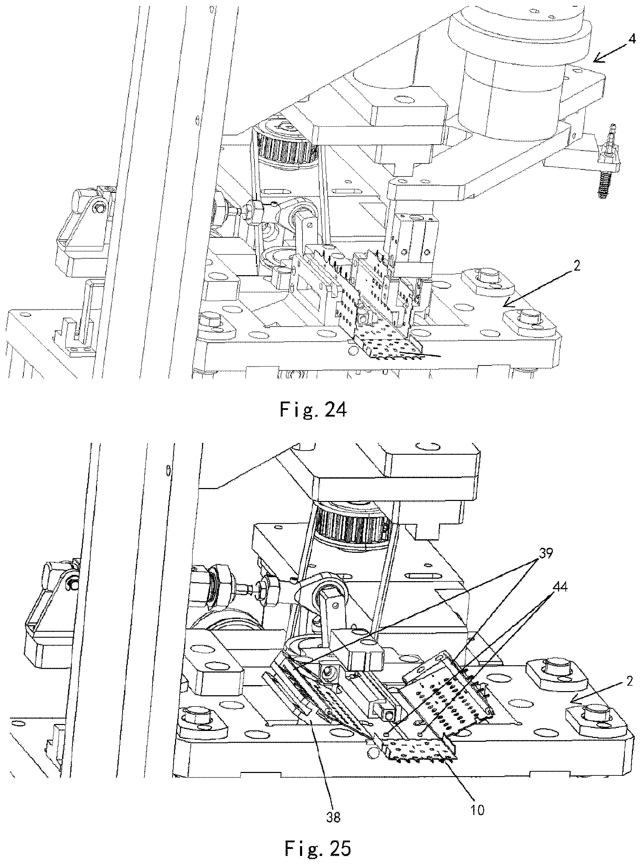

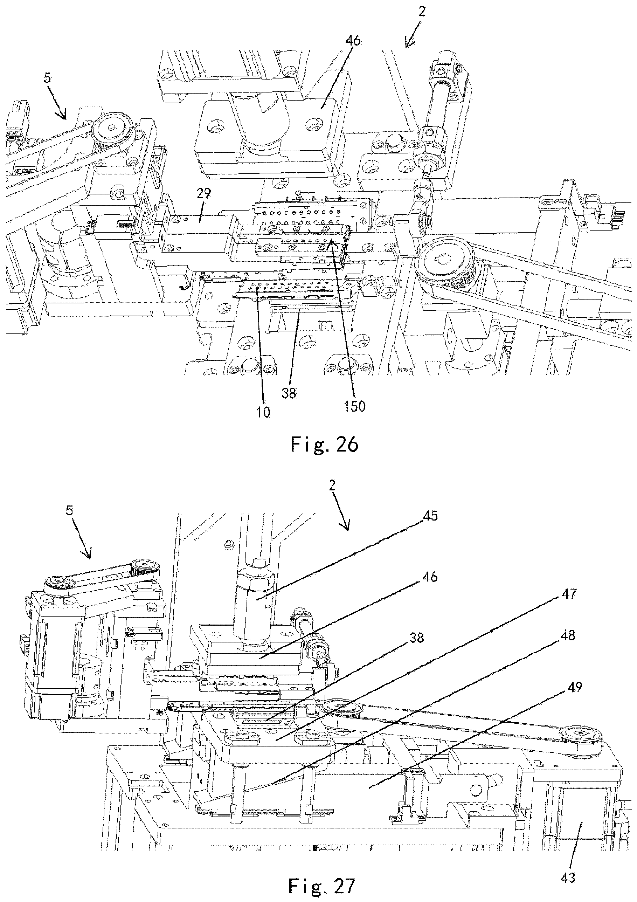

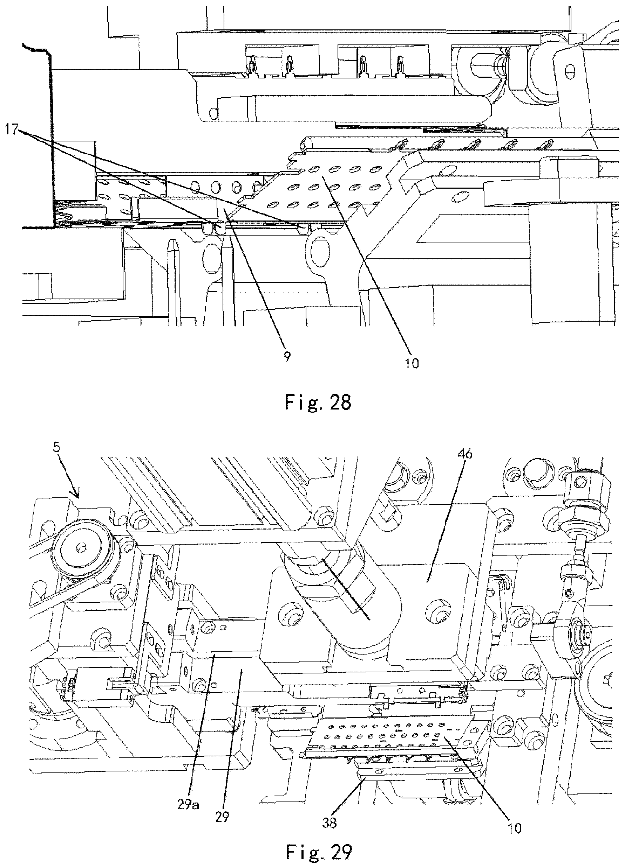

Fig.21 is an illustrative view of a second assembling workstation 2 in the robot assembling system shown in Fig.1. Fig.22 is an illustrative view of a bending mechanism 38 of the second assembling workstation 2 shown in Fig.21; Fig.23 is an illustrative view of the bending mechanism 38 of the second assembling workstation 2 shown in Fig.21 in an opened state; Fig.24 is an illustrative view of loading the top case 10 on the second assembling workstation 2 by the first robot 4 of Fig.6; Fig.25 is an illustrative view of bending sidewalls of the top case 10 by the bending mechanism 38 in the second assembling workstation 2; Fig.26 is an illustrative view of loading the partition means 150 on the second assembling workstation 2 by the fingers 29 of the second robot 5; Fig.27 is an illustrative view of assembling the partition means 150 and the top case 10 on the second assembling workstation 2; and Fig.28 is an illustrative view of inserting protrusions 17 of the partition plate 9 into slots formed in the top plate of the top case 10..

The second assembling workstation 2 comprises a top case loading portion 201 configured to load the top case 10. As shown in Figs.23-27, the top case loading portion 201 may comprise four protruding pins 44 for positioning the top case 10. The second assembling workstation 2 may further comprise: two bending mechanisms 38, between which a space for receiving the top case 10 is defined, configured to bend two sidewalls of the top case 10, respectively; a supporting device 46 configured to support the partition plate 9 of the partition means 150 from opposite sides of the top case 10; and a lifting device 49 configured to lift or lower the top case 10.

As shown in Figs.21-25, each bending mechanisms comprises: a frame 41 configured to be rotatable about its pivotal axis; and a holding member 39 adapted to be engaged to the sidewall of the top case 10, so that the sidewall of the top case 10 is rotated with the frame 41 and bent. In an embodiment, the holding member 39 may comprise a pin or a frame member.

As shown in Figs.26-28, in a condition where the two sidewalls of the top case 10 are driven to the opened state by the bending mechanisms 38 and where the partition means 150 is located above the top case 10, the lifting device 49 drives the top case 10 to move toward the supporting device 46, so as to engage the slots formed in the top wall of the top case 10 to the protrusions 17 on the bottom side of the partition plate 9 (see Fig.3), respectively; then the bending mechanisms 38 release the two sidewalls of the top case 10, so that the two sidewalls of the top case 10 are moved toward each other and are engaged to the partition means 150 (see Fig.3), so as to form the top case assembly 100.

In an embodiment, as shown in Figs.26-27, the second assembling workstation 2 further comprises: a third driving device 45 configured to drive the supporting device 46 to move toward or away from the partition plate 9; and a fourth driving device 43 configured to drive the lifting device 49. In an embodiment, the third driving device 45 may comprise an air cylinder; the fourth driving device 43 may comprise a servo motor. As shown in Fig.27, the lifting device 49 may comprise a sliding frame. The sliding frame may drive the working table 47 to move up and down with the aid of an inclined contact surface 48 under the driving of the servo motor 43.

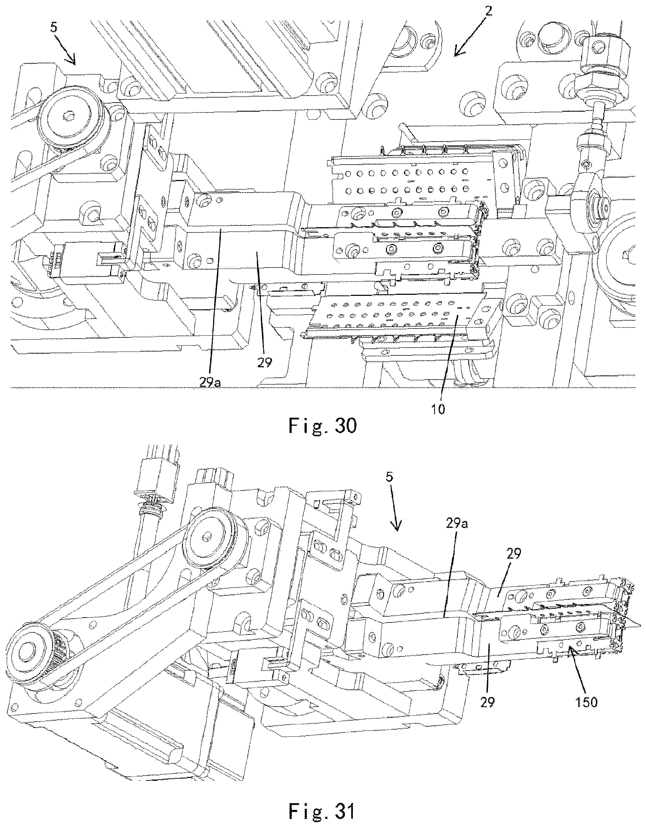

Figs.29-30 show an illustrative view of the fingers 29, which are opened by a certain angle, of the second robot 5; Fig.31 is an illustrative view of the opened fingers 29, on which the partition means 150 is mounted, of the second robot 5. As shown in Figs.29-31, during engaging the top case 10 to the partition means 150, the partition means 150 is assembled on the fingers 29 of the second robot 5. During engaging the sidewalls of the top case 10 to the partition assembly 15, the fingers 29 are adapted to be pivotally opened, so that the partition assembly 15 is inclined by an angle, so as to facilitate engaging the slots formed in the sidewalls of the top case 10 to the latches 16 on the partition assembly 15 (see Fig.3), respectively.

In an embodiment, the assembly process on the second assembling workstation 2 may be described as follows.

Firstly, as shown in Fig.24, when the bending mechanism 38 is in the closed state, the first robot 4 loads the top case 10 to the loading portion 201 on the second assembling workstation. As shown in Fig.25, the two positioning pins 44 on the loading portion 201 are inserted into holes formed in the top wall of the top case under the driving of the air cylinder, so as to fix the top case 10; then, the bending mechanism 38 is opened by the driving of the servo motor.

As shown in Fig.26, when the bending mechanism 38 is driven to reach the opened position, the griper 50 of the second robot 5 loads the partition means 150 onto the second assembling workstation 2 with the fingers 29. The third driving device 45 drives the supporting device 46, for example, in a form of a pressing block, to move toward the partition plate 9, so that the supporting device 46 is pressed against the top side of the partition plate 9.

Then, as shown in Figs.27 and 28, the sliding frame served as the lifting device 49 drives the working table 47 to move up with the aid of an inclined contact surface 48 under the driving of the servo motor 43, so as to insert the protrusion 17 on the bottom side of the partition plate 9 into the slot formed in the bottom wall of the top case 10.

Then, as shown in Figs.29-31, the fingers 29 of the second robot 5 are rotated and opened by a certain angle, so that the partition assembly 15 is inclined by the angle. In this condition, the bending mechanism 38 releases the two sidewalls of the top case 10. During releasing the sidewalls, the latches 16 formed on the outer side of the partition assembly 15 are inserted into the slots 18 formed in the two sidewalls of the top case 10, respectively. The inclination angle of the partition assembly 15 will facilitate smoothly inserting the latches 16 into the slots.

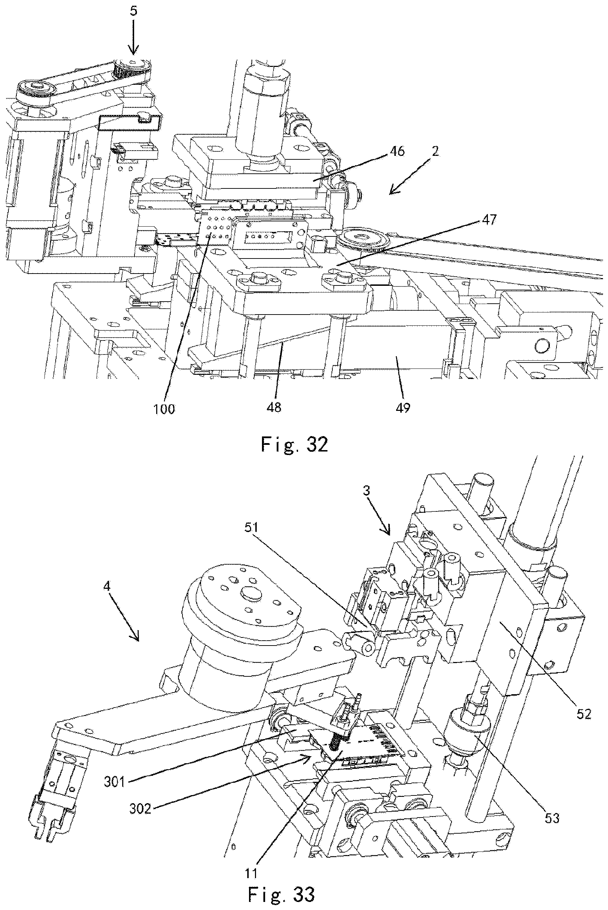

Fig.32 is an illustrative view of the partition means 150 and the top case 10 assembled together on the second assembling workstation 2. As shown in Fig.32, after the bending mechanism 38 is closed, the partition means 150 and the top case 10 are assembled to the top case assembly 100.

As shown in Fig.32, after assembling the partition means 150 and the top case 10 to the top case assembly 100 on the second assembling workstation 2, the robot 5 removes the top case assembly 100 from the loading location of the second assembling workstation 2 with its fingers 29, and transmits the top case assembly 100 to the third assembling workstation 3 for the next assembling operation.

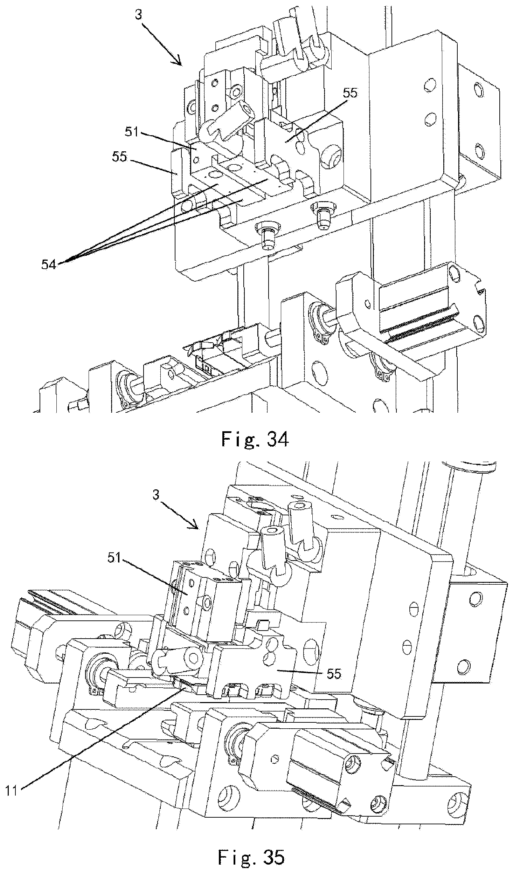

Fig.33 is an illustrative view of loading the bottom case on a third assembling workstation 3 by the first robot 4. As shown in Fig.33, the third assembling workstation 3 comprises: a bottom case loading portion 301 configured to load the bottom case 11; a receiving portion 302 configured to receive the top case assembly 100; and a suction device 51 adapted to suck up the bottom case 11 and configured to be movable up and down, so as to drive the bottom case 11 to engage with the partition plate 9 and the sidewalls of the top case assembly 100, and form the multi-layer cage as shown in Fig.2. As shown in Fig.34, the suction device 51 may comprise an air claw. The air claw of the suction device 51 may be movable up and down by the sliding frame 52.

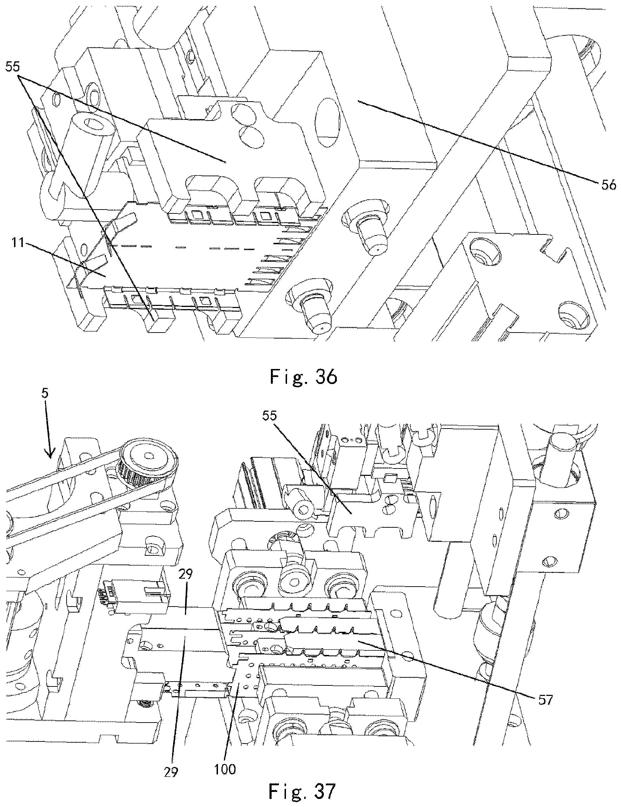

Fig.34 is an illustrative structure view of an air claw of the third assembling workstation shown in Fig.33; Fig.35 is an illustrative structure view of sucking up the bottom case by the air claw; Fig.36 is an illustrative view of details of the air claw. As shown in Figs.34-36, the suction device 51 comprises: a plurality of vacuum suction nozzles 54 configured to suck up the bottom case 11; and two sliding blocks 55 located at both sides of the vacuum suction nozzle 54 and configured to be movable toward each other, so as to clamp the bottom case 11 therebetween. In an embodiment, as shown in Fig.36, the sliding frame 52 comprises a back plate 56 constructed to position the bottom case 11.

In an embodiment, as shown in Fig.33, the third assembling workstation 3 further comprises: a fifth driving device 53 configured to drive the suction device 51 to move up and down by the sliding frame 52; and a sixth driving device (not shown) configured to drive the two sliding blocks 55 to move toward each other. In an embodiment, the fifth driving device 53 and the sixth driving device may comprise an air cylinder.

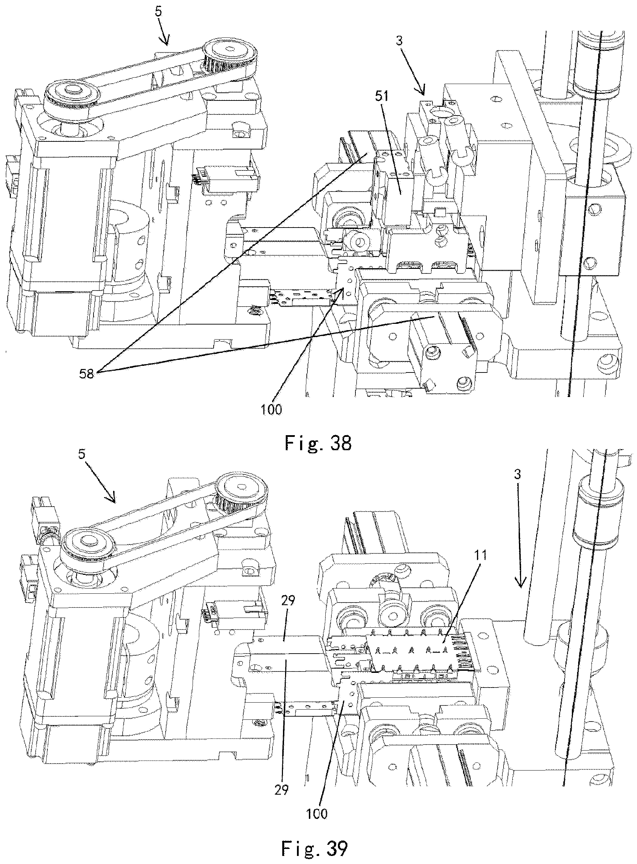

Fig.37 is an illustrative view of loading the top case assembly 100 on the third assembling workstation 3 by the fingers 29 of the second robot 5; Fig.38 is an illustrative view of moving the bottom case 11 to a position above the top case assembly 100 by the air claw; and Fig.39 is an illustrative view of assembling the bottom case 11 to the top case assembly 100 on the third assembling workstation 3. As shown in Figs.37-39, during engaging the bottom case 11 to the top case assembly 100, the top case assembly 100 is assembled to the fingers 29 of the second robot 5.

In an embodiment of the present invention, the fingers 29 are adapted to be pivotally opened when the bottom case 11 are engaged to the partition plate 9 of the top case assembly 100, so that the partition assembly 15 is inclined by an angle, and the sidewalls of the top case 10 are opened outward, so as to avoid an interference between the bottom case 11 and the sidewalls of the top case 10.

In an embodiment, as shown in Fig.38, the third assembling workstation 3 may further comprise a seventh driving device 58 constructed to drive the opened sidewalls of the top case 10 to be moved toward each other, so as to engage the sidewalls of the top case 10 to the bottom case 11. In an embodiment, the seventh driving device 58 may comprise an air cylinder.

In an embodiment, operation of assembling the multi-layer cage on the third assembling workstation 3 may be described as follows.

Firstly, as shown in Fig.33, the bottom case 11 is loaded on the loading portion 301 of the third assembling workstation 3 by the vacuum sucker 27 of the first robot 4. The loading portion 301 is provided with a loading plate 57 adapted to load the bottom case 11 and a slot adapted to position the partition plate 9.

Then, as shown in Figs.35-36, after the bottom case 11 is loaded on the loading location of the third assembling workstation 3, the air claw of the suction device 51 is moved downward, the vacuum suction nozzles 54 on the bottom surface of the air claw sucks up the bottom case 11. At this time, the sliding blocks 55 at both sides of the air claw are moved toward the center of the bottom case 11, so as to position and clamp the bottom case 11. In this condition, the suction device 51 sucks up the bottom case 11 and moves upward.

Then, as shown in Fig.37, the gripper 50 of the second robot 5 loads the top case assembly 100 into the receiving portion of the third assembling workstation 3 with the fingers 29. The partition plate 9 is inserted into the slot of the receiving portion. At this time, pins of the partition plate 9 and the top case 10 are exposed out of the suction device 51.

During assembling the partition plate 9 to the bottom case 11, in order to avoid the interference between the bottom case 11 and the pins of the top case 10, the fingers 29 of the second robot 5 are rotated by a certain angle, so that the partition assembly 15 is inclined by a certain angle and pushes the sidewalls of the top case 10 to be slightly opened, so as to avoid the interference between the bottom case 11 and the pin of the top case 10. In this condition, as shown in Fig.38, the suction device 51 sucks up the bottom case 11 and moves downward, so that the bottom case 11 is firstly engaged to the partition plate 9 of the top case assembly 100. Then, the fingers 29 are closed, and the seventh driving device 58 at both sides of the third assembling workstation 3 will drive and adjust the two sidewalls of the top case 10 to a vertical position. Then, the air claw of the suction device 51 continuously moves downward, so as to push the hook 19 of the bottom case 11 to engage with the clip 20 of the top case 10 (see Fig.3). Thus, the assembly of the whole multi-layer cage is completed.

In another exemplary embodiment of the present invention, there is provided a method of assembling a multi-layer cage by the above robot assembling system, and the method mainly comprises steps of:
S1: loading the partition plate 9 and the partition assembly 15 onto the first assembling workstation 1 by the robot, and assembling the partition plate 9 and the partition assembly 15 on the first assembling workstation 1, so as to form the partition means 150;
S2: loading the top case 10 and the partition means 150 onto the second assembling workstation 2 by the robot, and assembling the top case 10 and the partition means 150 on the second assembling workstation 2, so as to form the top case assembly 100; and
S3: loading the top case assembly 100 and the bottom case 11 onto the third assembling workstation 3 by the robot, and assembling the top case assembly 100 and the bottom case 11 on the third assembling workstation 3, so as to form the multi-layer cage.

As shown in Figs.11-13, in another exemplary embodiment of the present invention, there is provided a robot 5 for a multi-layer cage. The multi-layer cage comprises a bottom case 11, a top case 10, at least one partition plate 9 and at least two partition assemblies 15. The robot 5 comprises a gripper 50 adapted to hold the multi-layer cage or the subassembly thereof. The gripper 50 comprises two fingers 29 opposite to each other, the partition plate 9 is adapted to be received in a gap 29a between the two fingers 29, and the partition assembly 15 is adapted to be sleeved on the finger 29.

In an embodiment, the two fingers 29 are configured to be rotatable relative to each other about a direction perpendicular to the fingers 29, so as to close or open the gap 29a between the two fingers 29.

In an embodiment, the gripper 50 further comprises holding blocks 30 located at both sides of each finger 29, the holding blocks 30 are adapted to elastically press the partition assembly 15 on the fingers 29 when the partition assembly 15 is sleeved on the fingers 29.

In an embodiment, the holding block 30 comprises pins 13 and spheres 35; the spheres 35 are adapted to be pressed against the partition assembly 15 by springs 34, respectively.

In the above various exemplary embodiments of the present invention, the robot assembling system and method for assembling the multi-layer cage as well as the robot may realize the automatic assembling of the multi-layer cage, which greatly improves the efficiency of assembling the multi-layer cage, saves the labor cost, increases the assembly precision, and effectively avoids the interference among various components during assembling.

It should be appreciated for those skilled in this art that the above embodiments are intended to be illustrated, and not restrictive.

Although several exemplary embodiments have been shown and described, it would be appreciated by those skilled in the art that various changes or modifications may be made in these embodiments without departing from the invention, the scope of which is defined in the appended claims.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A robot assembling system for assembling a multi-layer cage comprising a bottom case (11), a top case (10), at least one partition plate (9) and at least two partition assemblies (15), the robot assembling system comprising:
a first assembling workstation (1) configured to assemble the partition plate (9) and the at least two partition assemblies (15) to form a partition means (150);
a second assembling workstation (2) configured to assemble the partition means (150) and the top case (10) to form a top case assembly (100);
a third assembling workstation (3) configured to assemble the top case assembly (100) and the bottom case (11) to form a multi-layer cage; and
at least one robot configured to transfer the bottom case (11), the top case (10), the partition plate (9), the at least two partition assemblies (15), the partition means (150) or the top case assembly (100) between respective assembling workstation (1, 2, 3), and assist an assembly process at each assembling workstation (1, 2, 3).

2. The robot assembling system according to claim 1, wherein the first assembling workstation (1) comprises:
a partition plate loading portion (101) configured to load the partition plate (9);
a partition assembly loading portion (102) configured to load the at least two partition assemblies (15);
a partition assembly driving device configured to drive the at least two partition assemblies (15) to be engaged to the partition plate (9) to form the partition means (150).

3. The robot assembling system according to claim 2,
wherein the partition plate loading portion (101) comprises: a guide slot (25) into which the partition plate (9) is to be inserted; and a push block (26) configured to fix the partition plate (9) in the guide slot (25) by a spring;
wherein the partition assembly driving device comprises: a first driving device (21) configured to drive the at least two partition assemblies (15) in a first direction parallel to the partition plate (9); and a second driving device (23) configured to drive the partition assemblies (15) in a second direction perpendicular to the first direction.

4. The robot assembling system according to claim 3,
wherein the at least one robot comprises a gripper (28) adapted to hold the partition means (150) and comprising two fingers (29) opposite to each other, a gap (29a) being defined between the two fingers (29) to receive the partition plate (9), the at least two partition assemblies (15) being adapted to be sleeved on the fingers (29), respectively.

5. The robot assembling system according to claim 4,
wherein the two fingers (29) are configured to be rotatable relative to each other about a direction perpendicular to the fingers (29), so as to close or open the gap (29a) between the two fingers (29).

6. The robot assembling system according to claim 5,
wherein the gripper (28) further comprises holding blocks (30) located at both sides of each finger (29) and adapted to elastically press the partition assembly (15) on the finger (29) when the partition assembly (15) is sleeved on the finger (29).

7. The robot assembling system according to claim 6,
wherein the holding block (30) comprises pins (33) loaded by springs (34), and a sphere (35) adapted to be pressed against the partition assembly (15) by the springs (34).

8. The robot assembling system according to claim 4,
wherein the first assembling workstation (1) further comprises a receiving portion (103) located at both sides of the partition plate loading portion (101), so as to receive the fingers (29) of the at least one robot.

9. The robot assembling system according to claim 1, wherein the second assembling workstation (2) comprises:
a top case loading portion (201) configured to load the top case (10);
two bending mechanisms (38), between which a space for receiving the top case (10) is defined, configured to bend two sidewalls of the top case (10), respectively;
a supporting device (46) configured to support the partition plate (9) of the partition means (150) from opposite sides of the top case (10); and
a lifting device (49) configured to lift or lower the top case (10),
wherein in a condition where the two sidewalls of the top case (10) are opened by the bending mechanisms (38) and where the partition means (9) is located above the top case (10), the lifting device (49) drives the top case (10) to move toward the supporting device (46), so that the top case (10) is engaged to the partition plate (9); then the bending mechanisms (38) release the two sidewalls of the top case (10), so that the two sidewalls of the top case (10) are driven to move toward each other and are engaged to the partition means (150), so as to form the top case assembly (100).

10. The robot assembling system according to claim 5 and claim 9,
wherein the partition means (9) is assembled on the fingers (29) of the robot during engaging the top case (10) to the partition means (150); and
wherein the fingers (29) are adapted to be pivotally opened when the sidewalls of the top case (10) are engaged to the partition assembly (15), so that the partition assembly (15) is inclined by an angle, so as to facilitate engaging the sidewalls of the top case (10) to the partition assembly (15).

11. The robot assembling system according to claim 9, wherein each bending mechanisms (38) comprises:
a frame configured to be rotatable about its pivotal axis; and
a holding member adapted to be engaged to the sidewall of the top case, so that the sidewall of the top case is rotated with the frame and bent.

12. The robot assembling system according to claim 1, wherein the third assembling workstation (3) comprises:
a bottom case loading portion (301) configured to load the bottom case (11);
a receiving portion (302) configured to receive the top case assembly (100); and
a suction device (51) adapted to suck up the bottom case (11) and configured to be movable up and down, so as to drive the bottom case (11) to engage with the partition plate (9) and the sidewalls of the top case assembly (100) to form the multi-layer cage.

13. The robot assembling system according to claim 12, wherein the suction device (51) comprises:
a plurality of vacuum suction nozzles (54) configured to suck up the bottom case (11); and
two sliding blocks (55) located at both sides of the vacuum suction nozzle (54) and configured to be movable toward each other, so as to clamp the bottom case (11).

14. The robot assembling system according to claim 13, wherein the third assembling workstation (3) further comprises:
a fifth driving device (53) configured to drive the suction device (51) to move up and down; and
a sixth driving device configured to drive the two sliding blocks (55) to move toward each other.

15. A method of assembling a multi-layer cage by the robot assembling system according to claim 1, comprising steps of:
S1: loading the partition plate (9) and the at least two partition assemblies (15) onto the first assembling workstation (1) by the robot, and assembling the partition plate (9) and the at least two partition assemblies (15) on the first assembling workstation (1), so as to form the partition means (150);
S2: loading the top case (10) and the partition means (150) onto the second assembling workstation (2) by the robot, and assembling the top case 10 and the partition means (150) on the second assembling workstation 2, so as to form the top case assembly 100; and
S3: loading the top case assembly (100) and the bottom case (11) onto the third assembling workstation (3) by the robot, and assembling the top case assembly (100) and the bottom case (11) on the third assembling workstation (3), so as to form the multi-layer cage.

## Patentansprüche

1. Roboter-Montagesystem zum Montieren eines mehrschichtigen Käfigs, der ein unteres Gehäuse (11), ein oberes Gehäuse (10), wenigstens eine Trennplatte (9) sowie wenigstens zwei Trenn-Baugruppen (15) umfasst, wobei das Roboter-Montagesystem umfasst:
einen ersten Montage-Arbeitsplatz (1), der so ausgeführt ist, dass die Trennplatte (9) und die wenigstens zwei Trenn-Baugruppen (15) montiert werden, um eine Trenneinrichtung (150) auszubilden;
einen zweiten Montage-Arbeitsplatz (2), der so ausgeführt ist, dass die Trenneinrichtung (150) und das obere Gehäuse (10) montiert werden, um eine obere Gehäusebaugruppe (100) auszubilden;
einen dritten Montage-Arbeitsplatz (3), der so ausgeführt ist, dass die obere Gehäusebaugruppe (100) und das untere Gehäuse (11) montiert werden, um einen mehrschichtigen Käfig auszubilden; sowie
wenigstens einen Roboter, der so ausgeführt ist, dass er das untere Gehäuse (11), das obere Gehäuse (10), die Trennplatte (9), die wenigstens zwei Trenn-Baugruppen (15), die Trenneinrichtung (150) oder die obere Gehäusebaugruppe (100) zwischen jeweiligen Montage-Arbeitsplätzen (1, 2, 3) überführt und einen Montageprozess an jedem Montage-Arbeitsplatz (1, 2, 3) unterstützt.

2. Roboter-Montagesystem nach Anspruch 1, wobei der erste Montage-Arbeitsplatz (1) umfasst:
einen Abschnitt (101) zum Zuführen einer Trennplatte, der zum Zuführen der Trennplatte (9) ausgeführt ist;
einen Abschnitt (102) zum Zuführen von Trenn-Baugruppen, der zum Zuführen der wenigstens zwei Trenn-Baugruppen (15) ausgeführt ist;
eine Vorrichtung zum Verschieben von Trenn-Baugruppen, die so ausgeführt ist, dass sie die wenigstens zwei Trenn-Baugruppen (15) so verschiebt, dass sie mit der Trennplatte (9) in Eingriff gebracht werden, um die Trenneinrichtung (150) auszubilden.

3. Roboter-Montagesystem nach Anspruch 2,
wobei der Abschnitt (101) zum Zuführen einer Trennplatte einen Führungsschlitz (25), in den die Trennplatte (9) eingeführt wird, sowie einen Drück-Block (26) umfasst, der so ausgeführt ist, dass er die Trennplatte (9) mittels einer Feder in dem Führungsschlitz (25) fixiert;
wobei die Vorrichtung zum Verschieben von Trenn-Baugruppen eine erste Verschiebevorrichtung (21), die so ausgeführt ist, dass sie die wenigstens zwei Trenn-Baugruppen (15) in einer ersten Richtung parallel zu der Trennplatte (9) bewegt, sowie eine zweite Verschiebevorrichtung (23) umfasst, die so ausgeführt ist, dass sie die Trenn-Baugruppen (15) in einer zweiten Richtung senkrecht zu der ersten Richtung verschiebt.

4. Roboter-Montagesystem nach Anspruch 3,
wobei der wenigstens eine Roboter einen Greifer (28) umfasst, der zum Halten der Trenneinrichtung (150) eingerichtet ist und zwei einander gegenüberliegende Finger (29) umfasst, wobei ein Spalt (29a) zwischen den zwei Fingern (29) zum Aufnehmen der Trennplatte (9) ausgebildet ist und die wenigstens zwei Trenn-Baugruppen (15) jeweils zum Aufschieben auf die Finger (29) eingerichtet sind.

5. Roboter-Montagesystem nach Anspruch 4,
wobei die zwei Finger (29) so ausgeführt sind, dass sie relativ zueinander um eine Richtung senkrecht zu den Fingern (29) gedreht werden können, um so den Spalt (29a) zwischen den zwei Fingern (29) zu schließen oder zu öffnen.

6. Roboter-Montagesystem nach Anspruch 5,
wobei der Greifer (28) des Weiteren Halte-Blöcke (30) umfasst, die sich an beiden Seiten jedes Fingers (29) befinden und so eingerichtet sind, dass sie die Trenn-Baugruppe (15) elastisch an den Finger (29) drücken, wenn die Trenn-Baugruppe (15) auf den Finger (29) geschoben wird.

7. Roboter-Montagesystem nach Anspruch 6,
wobei der Halte-Block (30) durch Federn (34) gespannte Stifte (33) und eine Kugel (35) umfasst, die so eingerichtet ist, dass sie durch die Federn (34) an die Trenn-Baugruppe (15) gedrückt werden kann.

8. Roboter-Montagesystem nach Anspruch 4,
wobei der erste Montage-Arbeitsplatz (1) des Weiteren einen Aufnahmeabschnitt (103) umfasst, der sich an beiden Seiten des Abschnitts (101) zum Zuführen einer Trennplatte befindet und so die Finger (29) des wenigstens einen Roboters aufnimmt.

9. Roboter-Montagesystem nach Anspruch 1, wobei der zweite Montage-Arbeitsplatz (2) umfasst:
einen Abschnitt (201) zum Zuführen eines oberen Gehäuses, der zum Zuführen des oberen Gehäuses (10) ausgeführt ist;
zwei Biege-Mechanismen (38), zwischen denen ein Raum zum Aufnehmen des oberen Gehäuses (10) ausgebildet ist und die jeweils zum Biegen zweier Seitenwände des oberen Gehäuses (10) ausgeführt sind;
eine Tragevorrichtung (46), die so ausgeführt ist, dass sie die Trennplatte (9) der Trenneinrichtung (150) von gegenüberliegenden Seiten des oberen Gehäuses (10) her trägt; und
eine Hebevorrichtung (49), die zum Anheben oder Absenken des oberen Gehäuses (10) ausgeführt ist,
wobei in einem Zustand, in dem die zwei Seitenwände des oberen Gehäuses (10) durch die Biege-Mechanismen (38) geöffnet werden und in dem sich die Trenneinrichtung (9) oberhalb des oberen Gehäuses (10) befindet, die Hebevorrichtung (49) das obere Gehäuse (10) so verschiebt, dass es sich so auf die Tragevorrichtung (46) zu bewegt, dass das obere Gehäuse (10) mit der Trennplatte (9) in Eingriff gebracht wird, dann die Biege-Mechanismen (38) die zwei Seitenwände des oberen Gehäuses (10) freigeben, so dass die zwei Seitenwände des oberen Gehäuses (10) so verschoben werden, dass sie sich aufeinander zu bewegen und mit der Trenneinrichtung(150) in Eingriff gebracht werden und so die obere Gehäusebaugruppe (100) gebildet wird.

10. Roboter-Montagesystem nach Anspruch 5 und Anspruch 9,
wobei die Trenneinrichtung (9) an den Fingern (29) des Roboters montiert wird, während das obere Gehäuse (10) mit der Trenneinrichtung (150) in Eingriff gebracht wird; und
wobei die Finger (29) so eingerichtet sind, dass sie schwenkend geöffnet werden, wenn die Seitenwände des oberen Gehäuses (10) so mit der Trenn-Baugruppe (15) in Eingriff gebracht werden, dass die Trenn-Baugruppe (15) um einen Winkel geneigt wird, um so Herstellen von Eingriff der Seitenwände des oberen Gehäuses (10) mit der Trenn-Baugruppe (15) zu erleichtern.

11. Roboter-Montagesystem nach Anspruch 9, wobei jeder Biege-Mechanismus (38) umfasst:
einen Rahmen, der so ausgeführt ist, dass er um seine Drehachse herum gedreht werden kann;und
ein Halteelement, das so eingerichtet ist, dass es mit der Seitenwand des oberen Gehäuses so in Eingriff gebracht wird, dass die Seitenwand des oberen Gehäuses mit dem Rahmen gedreht und gebogen wird.

12. Roboter-Montagesystem nach Anspruch 1, wobei der dritte Montage-Arbeitsplatz (3) umfasst:
einen Abschnitt (301) zum Zuführen eines unteren Gehäuses, der zum Zuführen des unteren Gehäuses (11) ausgeführt ist;
einen Aufnahmeabschnitt (302), der zum Aufnehmen der oberen Gehäusebaugruppe (100) ausgeführt ist; und
eine Saugvorrichtung (51), die zum Ansaugen des unteren Gehäuses (11) eingerichtet und so ausgeführt ist, dass sie nach oben und nach unten bewegt werden kann, um das untere Gehäuse (11) so zu verschieben, dass es mit der Trennplatte (9) und den Seitenwänden der oberen Gehäusebaugruppe (100) in Eingriff kommt, um den mehrschichtigen Käfig auszubilden.

13. Roboter-Montagesystem nach Anspruch 12, wobei die Saugvorrichtung (51) umfasst:
eine Vielzahl von Vakuum-Saugdüsen (54), die so ausgeführt sind, dass sie das untere Gehäuse (11) ansaugen; und
zwei Gleitblöcke (55), die sich an beiden Seiten der Vakuum-Saugdüse (54) befinden und so ausgeführt sind, dass sie aufeinander zu bewegt werden können, um so das untere Gehäuse (11) festzuklemmen.

14. Roboter-Montagesystem nach Anspruch 13, wobei der dritte Montage-Arbeitsplatz (3) des Weiteren umfasst:
eine fünfte Verschiebevorrichtung (53), die so ausgeführt ist, dass sie die Saugvorrichtung (51) so verschiebt, dass sie sich nach unten und nach oben bewegt; sowie eine sechste Verschiebevorrichtung, die so ausgeführt ist, dass sie die beiden Gleit-Blöcke (55) so verschiebt, dass sie sich aufeinander zu bewegen.

15. Verfahren zum Montieren eines mehrschichtigen Käfigs mittels des Roboter-Montagesystems nach Anspruch 1, umfassend die folgenden Schritte:
S1: Zuführen der Trennplatte (9) und der wenigstens zwei Trenn-Baugruppen (15) zu dem ersten Montage-Arbeitsplatz (1) durch den Roboter sowie Montieren der Trennplatte (9) und der wenigstens zwei Trenn-Baugruppen(15) an dem ersten Montage-Arbeitsplatz (1), um so die Trenneinrichtung (150) auszubilden;
S2: Zuführen des oberen Gehäuses (10) und der Trenneinrichtung (150) zu dem zweiten Montage-Arbeitsplatz (2) durch den Roboter sowie Montieren des oberen Gehäuses (10) und der Trenneinrichtung (150) an dem zweiten Montage-Arbeitsplatz (2), um so die obere Gehäusebaugruppe (100) auszubilden; und
S3: Zuführen der oberen Gehäusebaugruppe (100) und des unteren Gehäuses (11) zu dem dritten Montage-Arbeitsplatz (3) durch den Roboter sowie Montieren der oberen Gehäusebaugruppe (100) und des unteren Gehäuses (11) an dem dritten Montage-Arbeitsplatz (3), um den mehrschichtigen Käfig auszubilden.

## Revendications

1. Système d'assemblage de robot pour assembler une cage multicouches comprenant un boîtier inférieur (11), un boîtier supérieur (10), au moins une plaque de séparation (9) et au moins deux ensembles de séparation (15), le système d'assemblage de robot comprenant:
un premier poste de travail d'assemblage (1) configuré pour assembler la plaque de séparation (9) et lesdits au moins deux ensembles de séparation (15) pour former un moyen de séparation (150):
un deuxième poste de travail d'assemblage (2) configuré pour assembler le moyen de séparation (150) et le boîtier supérieur (10) pour former un ensemble de boîtier supérieur (100);
un troisième poste de travail d'assemblage (3) configuré pour assembler l'ensemble du boîtier supérieur (100) et le boîtier inférieur (11) pour former une cage multicouches; et
au moins un robot configuré pour transférer le boîtier inférieur (11), le boîtier supérieur (10), la plaque de séparation (9), lesdits au moins deux ensembles de séparation (15), les moyens de séparation (150) ou l'ensemble de boîtier supérieur (100) entre les postes de travail d'assemblage respectifs (1, 2, 3), et pour assister un processus d'assemblage à chaque poste de travail d'assemblage (1, 2, 3).

2. Système d'assemblage de robot selon la revendication 1, dans lequel le premier poste de travail d'assemblage (1) comprend:
une partie de chargement de plaque de séparation (101) configurée pour charger la plaque de séparation (9);
une partie de chargement de l'ensemble de séparation (102) configurée pour charger lesdits au moins deux ensembles de séparation (15);
un dispositif d'entraînement des ensembles de séparation configuré pour entraîner lesdits au moins deux ensembles de séparation (15) devant être engagés sur la plaque de séparation (9) pour former les moyens de séparation (150).

3. Système d'assemblage de robot selon la revendication 2,
dans laquelle la partie de chargement de la plaque de séparation (101) comprend: une fente de guidage (25) dans laquelle la plaque de séparation (9) doit être insérée; et un bloc de poussée (26) configuré pour fixer la plaque de séparation (9) dans la fente de guidage (25) par un ressort ;
dans lequel le dispositif d'entraînement des ensembles de séparation comprend: un premier dispositif d'entraînement (21) configuré pour entraîner lesdits au moins deux ensembles de séparation (15) dans une première direction parallèle à la plaque de séparation (9); et un second dispositif d'entraînement (23) configuré pour entraîner les ensembles de séparation (15) dans une seconde direction perpendiculaire à la première direction.

4. Système d'assemblage de robot selon la revendication 3,
dans lequel ledit au moins un robot comprend une pince (28) conçue pour tenir le moyen de séparation (150) et comprenant deux doigts (29) opposés l'un à l'autre, un espace (29a) étant défini entre les deux doigts (29) pour recevoir la plaque de séparation (9), lesdits au moins deux ensembles de séparation (15) étant conçus pour être enfilés sur les doigts (29), respectivement.

5. Système d'assemblage du robot selon la revendication 4,
dans laquelle les deux doigts (29) sont configurés pour pouvoir tourner l'un par rapport à l'autre dans une direction perpendiculaire aux doigts (29), de manière à fermer ou à ouvrir l'espace (29a) entre les deux doigts (29).

6. Système d'assemblage du robot selon la revendication 5,
dans lequel la pince (28) comprend en outre des blocs de maintien (30) situés des deux côtés de chaque doigt (29) et conçus pour presser élastiquement l'ensemble de séparation (15) sur le doigt (29) lorsque l'ensemble de séparation (15) est manchonné sur le doigt (29).

7. Système d'assemblage du robot selon la revendication 6,
dans lequel le bloc de maintien (30) comprend des broches (33) chargées par des ressorts (34), et une sphère (35) conçue pour se comprimer contre l'ensemble de la cloison (15) par les ressorts (34).

8. Système d'assemblage du robot selon la revendication 4,
dans lequel le premier poste de travail d'assemblage (1) comprend en outre une partie de réception (103) située des deux côtés de la partie de chargement de la plaque de séparation (101), de manière à recevoir les doigts (29) dudit au moins un robot.

9. Système d'assemblage de robot selon la revendication 1, dans lequel le deuxième poste de travail d'assemblage (2) comprend:
une partie de chargement du boîtier supérieur (201) configurée pour charger le boîtier supérieur (10);
deux mécanismes de pliage (38), entre lesquels est défini un espace pour recevoir le boîtier supérieur (10), configurés pour plier deux parois latérales du boîtier supérieur (10), respectivement;
un dispositif de support (46) configuré pour supporter la plaque de séparation (9) des moyens de séparation (150) depuis les côtés opposés du boîtier supérieur (10); et
un dispositif de levage (49) configuré pour soulever ou abaisser le boîtier supérieur (10),
dans lequel, dans une condition où les deux parois latérales du boîtier supérieur (10) sont ouvertes par les mécanismes de pliage (38) et où le moyen de séparation (9) est situé au-dessus du boîtier supérieur (10), le dispositif de levage (49) entraîne le boîtier supérieur (10) pour qu'il se déplace vers le dispositif de support (46), de sorte que le boîtier supérieur (10) est engagé dans la plaque de séparation (9); ensuite, les mécanismes de flexion (38) libèrent les deux parois latérales du boîtier supérieur (10), de sorte que les deux parois latérales du boîtier supérieur (10) sont entraînées pour se déplacer l'une vers l'autre et sont engagées dans le moyen de séparation (150), de manière à former le boîtier supérieur en tant qu'ensemble (100).

10. Système d'assemblage du robot selon la revendication 5 et la revendication 9,
dans lequel le moyen de séparation (9) est assemblé sur les doigts (29) du robot pendant l'engagement du boîtier supérieur (10) sur le moyen de séparation (150); et
dans lequel les doigts (29) sont conçus pour être ouverts de manière pivotante lorsque les parois latérales du boîtier supérieur (10) sont engagées dans l'ensemble de séparation (15), de sorte que l'ensemble de séparation (15) est incliné d'un angle, afin de faciliter l'engagement des parois latérales du boîtier supérieur (10) dans l'ensemble de séparation (15).

11. Système d'assemblage de robot selon la revendication 9, dans lequel chaque mécanisme de pliage (38) comprend:
un cadre configuré pour pouvoir tourner autour de son axe de pivotement;
un élément de maintien conçu pour s'engager sur la paroi latérale du boîtier supérieur, de sorte que la paroi latérale du boîtier supérieur tourne et se plie avec le cadre.

12. Système d'assemblage de robots selon la revendication 1, dans lequel le troisième poste de travail d'assemblage (3) comprend:
une partie de chargement du boîtier inférieur (301) configurée pour charger le boîtier inférieur (11) ;
une partie de réception (302) configurée pour recevoir l'ensemble du boîtier supérieur (100); et
un dispositif d'aspiration (51) conçu pour aspirer le boîtier inférieur (11) et configuré pour être mobile de haut en bas, de manière à entraîner le boîtier inférieur (11) à s'engager avec la plaque de séparation (9) et les parois latérales de l'ensemble du boîtier supérieur (100) pour former la cage multicouches.

13. Système d'assemblage de robot selon la revendication 12, dans lequel le dispositif d'aspiration (51) comprend:
une pluralité de buses d'aspiration à vide (54) configurées pour aspirer le boîtier inférieur (11); et
deux blocs coulissants (55) situés des deux côtés de la buse d'aspiration à vide (54) et configurés pour être déplacés l'un vers l'autre, de manière à serrer le boîtier inférieur (11).

14. Système d'assemblage de robot selon la revendication 13, dans lequel le troisième poste de travail d'assemblage (3) comprend en outre:
un cinquième dispositif d'entraînement (53) configuré pour entraîner le dispositif d'aspiration (51) afin qu'il se déplace vers le haut et vers le bas; et
un sixième dispositif d'entraînement configuré pour entraîner les deux blocs coulissants (55) à se rapprocher l'un de l'autre.

15. Procédé d'assemblage d'une cage multicouches par le système d'assemblage de robot selon la revendication 1, comprenant les étapes suivantes:
S1: chargement de la plaque de séparation (9) et des au moins deux ensembles de séparation (15) sur le premier poste de travail d'assemblage (1) par le robot, et assemblage de la plaque de séparation (9) et desdits au moins deux ensembles de séparation (15) sur le premier poste de travail d'assemblage (1), de manière à former le moyen de séparation (150);
S2: chargement du boîtier supérieur (10) et des moyens de séparation (150) sur le second poste de travail d'assemblage (2) par le robot, et assemblage du boîtier supérieur (10) et des moyens de séparation (150) sur le second poste de travail d'assemblage (2), de manière à former l'ensemble du boîtier supérieur 100; et
S3: chargement de l'ensemble du boîtier supérieur (100) et du boîtier inférieur (11) sur le troisième poste de travail d'assemblage (3) par le robot, et assemblage de l'ensemble du boîtier supérieur (100) et du boîtier inférieur (11) sur le troisième poste de travail d'assemblage (3), de manière à former la cage multicouches.
